# EUROPEAN PATENT APPLICATION

(11) **EP 4 425 683 A1**
(43) Date of publication of application: **04.09.2024**
(21) Application number: 23758898.3
(22) Date of filing: 06.01.2023
(51) Int. Cl.: H01M 50/519, H01M 50/507

(54) **FIXING SUPPORT FOR FLEXIBLE CIRCUIT BOARD, BUS COMPONENT, BATTERY, AND ELECTRIC DEVICE**

(30) Priority: 28.02.2022 CN 202220427272 U
(71) Applicant: Contemporary Amperex Technology Co., Limited, Ningde, Fujian 352100 (CN)
(72) Inventor: LIU, Shaozhong, Ningde, Fujian 352100 (CN); WANG, Chong, Ningde, Fujian 352100 (CN); ZHENG, Chenling, Ningde, Fujian 352100 (CN)
(74) Representative: Gong, Jinping
(86) International application number: PCT/CN2023/070826
(87) International publication number: WO 2023/160273

(57) **Abstract**

Embodiments of the present application disclose a fixing bracket for a flexible circuit board, a busbar component, a battery, and an electrical device. The fixing bracket (64) for the flexible circuit board (63) comprises: a connecting portion (641) for connecting the fixing bracket (64) to a target component that needs to be fixed; and a fixing portion (642) for limiting and fixing the flexible circuit board (63), wherein the connecting portion (641) is disposed between the target component and the fixing portion (642) and the connecting portion (641) is connected to the fixing portion (642). The technical solution of embodiments of the present application can inhibit warping or wearing of flexible circuit boards during transportation, thereby preventing abnormalities in battery sampling caused by warping or wearing of the flexible circuit boards.

## Description

### Cross-Reference to Related Applications

The present patent application claims priority to Chinese patent application 202220427272.X, filed on February 28, 2022, entitled "FIXING BRACKET FOR FLEXIBLE CIRCUIT BOARD, BUSBAR COMPONENT, BATTERY, AND ELECTRICAL DEVICE", the entire contents of which are incorporated herein by reference.

### Technical Field

The present application relates to the technical field of power batteries, and more specifically, to a fixing bracket for a flexible circuit board, a busbar component, a battery, and an electrical device.

### Background

With the increasing environmental pollution, the new energy industry is getting more and more attention. In the new energy industry, the battery technology is an important factor for its development.

In the development of the battery technology, it is also a non-negligible issue to ensure that the components inside the battery perform properly. How to protect the components inside the battery is a technical problem that needs to be solved in battery technology.

### Summary of the Invention

In view of the above problem, embodiments of the present application provide a fixing bracket for a flexible circuit board, a busbar component, a battery, and an electrical device, which can effectively inhibit warping of the flexible circuit board, thereby preventing abnormalities in battery sampling caused by wearing due to warping of the flexible circuit board.

In a first aspect, a fixing bracket for a flexible circuit board is provided, comprising: a connecting portion for connecting the fixing bracket to a target component that needs to be fixed; and a fixing portion for limiting and fixing the flexible circuit board, wherein the connecting portion is disposed between the target component and the fixing portion and the connecting portion is connected to the fixing portion.

In embodiments of the present application, the flexible circuit board is provided on the target component, with end portions of the flexible circuit board being fixed to the target component. By providing a connecting portion on the fixing bracket, the fixing bracket can be fixed to the target component. By providing a fixing portion on the fixing bracket, the flexible circuit board can be pressed tightly against the target component, thereby effectively preventing the flexible circuit board from warping and at the same time protecting components on the flexible circuit board from being broken.

In a possible implementation, the fixing portion further comprises an avoidance portion, the avoidance portion being used to avoid and fix the flexible circuit board and to accommodate at least part of the flexible circuit board.

In embodiments of the present application, an avoidance portion for avoiding and fixing the flexible circuit board is provided at the bottom of the fixing portion.

In a possible implementation, the fixing portion comprises a first fixing component, the first fixing component protruding towards the flexible circuit board in a first direction, with the first direction being a thickness direction of the fixing bracket.

In embodiments of the present application, the first fixing component protrudes out of the flexible circuit board, and when fixing the flexible circuit board, the first fixing component is capable of tightly pressing the flexible circuit board in the first direction, so that the flexible circuit board is fixed more firmly. In this way, during transportation, small-scale displacements of the flexible circuit board can be reduced as much as possible, and the first fixing component is capable of utilizing its own elasticity to press tightly and fix the flexible circuit board further in the first direction. By providing the first fixing component protruding out of the flexible circuit board in the first direction, it is possible to ensure that the flexible circuit board is pressed tightly and fixed in the first direction.

In a possible implementation, the connecting portion comprises connecting holes for connecting and fixing the fixing bracket to the target component.

In embodiments of the present application, the fixing bracket is fixed to the target component using the connecting holes, and such an implementation is simple, low-cost, and highly maneuverable, and thus has good practical performance.

In a possible implementation, the connecting portion comprises: a second fixing component, the second fixing component protruding away from the flexible circuit board in a second direction and being used to resiliently connect the target component, with the second direction being a thickness direction of the fixing bracket and the second direction being opposite to the first direction.

In embodiments of the present application, if a second fixing component is provided on the connecting portion, the fixing between the fixing bracket and the target component can be further enhanced to prevent shifting in the position of the fixing bracket in the thickness direction thereof.

In some possible implementations, the connecting portion comprises: a fixing structure for snap-fit of the connecting portion to the target component.

In embodiments of the present application, the fixing bracket is fixed to the target component via the connecting portion. Connecting portions of adjacent fixing brackets and a position-limit hole on the target component form a triangular position, and this triangular position is welded with a metal plate so that the fixing bracket is fixed to the target component. By providing a fixing structure on the fixing bracket, the fixing bracket is made in snap-fit with the metal plate as an integral body, so that even if the metal plate at the triangular position is damaged or the target component is damaged, the fixing bracket and the target component can be ensured to be fixed as an integral body, thus preventing the failure of battery sampling caused by warping and wearing of the flexible circuit board due to the wobbling of the fixing bracket.

In some possible implementations, the fixing structure comprises a hot riveting post and a snap-fit structure.

In embodiments of the present application, the fixing structure causes the target component to be in snap-fit with the fixing bracket as an integral body by means of a hot riveting post, which is a simple method that facilitates a wide range of applications in production.

In some possible implementations, the connecting portion forms a step structure with the fixing portion, and the connecting portion has a thickness less than the thickness of the fixing portion.

In embodiments of the present application, the step structure formed by the difference in thickness between the connecting portion and the fixing portion can enable the fixing bracket to be in snap-fit exactly with the target component, thereby enhancing the fixing effect of the fixing portion on the target component.

In some possible implementations, an add-on plug-in member is also included, the add-on plug-in member being used for snap-fit of an add-on external component.

In embodiments of the present application, the add-on external component is used for sampling the performance of the battery, and the provision of the add-on plug-in member can enable the external component to be fixed at a sampling point where the battery needs to be sampled, thus preventing the external component from falling off.

In a second aspect, the present application provides a busbar component, comprising: an insulating plate; a metal plate fixed to the insulating plate; a flexible circuit board provided on the insulating plate, with end portions of the flexible circuit board being fixed between the insulating plate and the metal plate; and a fixing bracket of the above embodiments.

In a third aspect, the present application provides a battery, comprising a plurality of battery cells and a busbar component in the above embodiments.

In a fourth aspect, the present application provides an electrical device comprising a battery of the above embodiments, the battery being used to provide electric energy.

### Description of Drawings

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.
Fig. 1 is a structural schematic diagram of a vehicle of an embodiment of the present application;
Fig. 2 is an exploded structural schematic diagram of a battery of an embodiment of the present application;
Fig. 3 is a structural schematic diagram of a fixing bracket for a flexible circuit board of an embodiment of the present application;
Fig. 4 is a structural schematic diagram of a fixing bracket for a flexible circuit board of another embodiment of the present application;
Fig. 5 is a structural schematic diagram of a fixing bracket for a flexible circuit board of another embodiment of the present application;
Fig. 6 is an exploded schematic diagram of a busbar component of an embodiment of the present application; and
Fig. 7 is a structural schematic diagram of a busbar component of an embodiment of the present application;

The reference signs in Detailed Description are as follows:
vehicle 1; battery 2; battery cell 3; busbar component 6;
box body 10; controller 11; motor 12; insulating plate 61; metal plate 62; flexible circuit board 63; fixing bracket 64;
first box body 101; second box body 102; accommodating space 103; connecting portion 641; fixing portion 642; add-on plug-in member 643;
connecting hole 6411; second fixing component 6412; fixing structure 6413; first fixing component 6421; avoidance portion 6422.

### Detailed Description

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "comprising" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

In the present application, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery cell may be in a cylindrical shape, a flat shape, or other shapes, which is also not limited in the embodiments of the present application. The battery cells are generally classified into three types depending on the way of encapsulating manners: cylindrical cells, prismatic cells and pouch cells, which will also not be limited in the embodiments of the present application.

The battery mentioned in embodiments of the present application refers to a single physical module comprising one or more battery cells to provide a higher voltage and capacity. For example, the battery mentioned in the present application may include a battery module or a battery pack, or the like. The battery generally comprises a box body for encapsulating one or more battery cells. The box body can prevent liquids or other foreign matters from affecting the charging or discharging of the battery cells.

The battery cell may include an electrode assembly and an electrolyte solution. The electrode assembly and the electrolyte solution are accommodated in the case of the battery cell. The electrode assembly consists of a positive electrode sheet, a negative electrode sheet, and a separation film. The battery cell operates mainly relying on movement of metal ions between the positive electrode plate and the negative electrode plate. The positive electrode sheet comprises a positive electrode current collector and a positive electrode active material layer, wherein the positive electrode active material layer is coated on a surface of the positive electrode current collector, the part of the positive electrode current collector not coated with the positive electrode active material layer protrudes out of the part of the positive electrode current collector already coated with the positive electrode active material layer, and the part of the positive electrode current collector not coated with the positive electrode active material layer serves as a positive electrode tab. Taking a lithium-ion battery as an example, the material of the positive electrode current collector may be aluminum, and the positive electrode active material may be lithium cobaltate, lithium iron phosphate, ternary lithium, lithium manganate, or the like. The negative electrode sheet comprises a negative electrode current collector and a negative electrode active material layer, wherein the negative electrode active material layer is coated on a surface of the negative electrode current collector, the part of the negative electrode current collector not coated with the negative electrode active material layer protrudes out of the part of the negative electrode current collector already coated with the negative electrode active material layer, and the part of the negative electrode current collector not coated with the negative electrode active material layer serves as a negative electrode tab. The material of the negative electrode current collector may be copper, and the negative electrode active material may be carbon, silicon, or the like. In order to ensure that no fusing occurs when a large current passes, there are a plurality of positive tabs which are stacked together, and there are a plurality of negative tabs which are stacked together. The separator may be made from polypropylene (PP), polyethylene (PE), or the like. In addition, the electrode assembly may be of a wound structure or a laminated structure, and embodiments of the present application are not limited thereto. The following embodiments are illustrated taking a square battery cell as an example for the convenience of illustration.

The electrical pallet in the battery module is mainly used to carry the insulating plate connected to the battery cell to realize automatic welding of the battery cell and the insulating plate. The voltage and temperature collecting wire harnesses of the battery are arranged in the grooves of the electrical pallet and are fixed with snaps or ties, which is a cumbersome arrangement of wire harnesses with a low degree of automation; and the battery management system is an independent module arranged in the battery module, which occupies a large amount of space and is not conducive to the improvement of the energy density of the battery.

Therefore, in today's battery modules, flexible circuit boards are used instead of collecting wire harnesses in most cases to collect the voltage and temperature of the battery. However, at present, the flexible circuit boards are very vulnerable to wearing during transportation for the following reasons: 1. most of the existing circuit board fixing methods are applicable to hard circuit boards, while flexible circuit boards are soft, and the springs in the existing fixing methods will lead to the flexible circuit boards being scratched by the springs, which will therefore cause wearing of the flexible circuit boards; and 2. the springs and the latches in the existing fixing methods correspond to a large occupied space, leaving less room above and below the flexible circuit boards in the battery module. The lower part is close to the battery, and the upper part is close to the top cover, so that the corresponding space cannot accommodate the addition of this structure.

Based on the above considerations, the present application provides a new type of circuit board fixing bracket specialized for a flexible circuit board, which can effectively prevent the flexible circuit board from warping, and thus can prevent abnormalities in sampling due to wearing caused by the warping of the flexible circuit board, and can provide a fixing point for an external component, resulting in a low cost and a simple automation implementation, and thus a good practical performance.

The fixing bracket for a flexible circuit board described in embodiments of the present application is applicable to busbar components, batteries, and electrical devices using batteries.

The electrical device may be, but not limited to, a vehicle, a mobile phone, a portable device, a laptop, a ship, a spacecraft, an electric toy, an electric tool, and so on. The vehicle may be a fuel vehicle, a gas vehicle or a new energy vehicle. The new energy vehicle may be an all-electric vehicle, a hybrid electric vehicle, an extended-range electric vehicle, or the like. The spacecraft comprises airplanes, rockets, space shuttles, spaceships, and the like. The electric toy comprises fixed or mobile electric toys, such as game consoles, electric car toys, electric ship toys and electric aircraft toys. The electric tool comprises metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical apparatus is not specially limited in the embodiments of the present application.

In the following embodiments, for the convenience of description, the electrical apparatus being a vehicle is taken as an example for illustration.

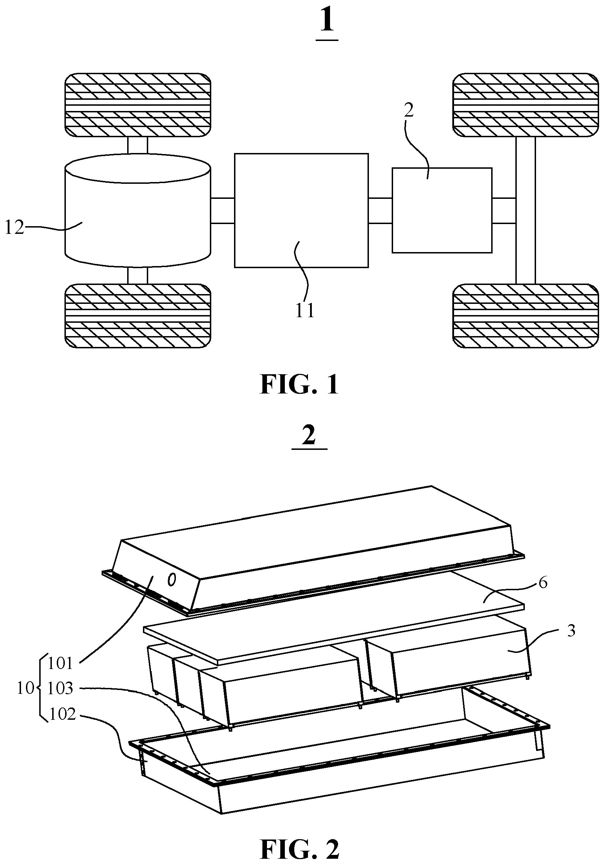

Fig. 1 is a structural schematic diagram of a vehicle 1 provided in an embodiment of the present application. As shown in Fig. 1, the vehicle 1 is provided with a battery 2 inside, and the battery 2 can be provided at the bottom or head or tail of the vehicle 1. The battery 2 may be used to power the vehicle 1. For example, the battery 2 may be used as an operating power source of the vehicle 1.

The vehicle 1 may further comprise a controller 11 and a motor 12, wherein the controller 11 is used to control the battery 2 to supply power to the motor 13, for example, for the operating power demand when the vehicle 1 is starting, navigating and driving.

In some embodiments of the present application, the battery 2 can not only be used as the operating power source of the vehicle 1, but also be used as a driving power source of the vehicle 1 to replace or partially replace fuel or natural gas to provide driving power for the vehicle 1.

Fig. 2 is an exploded schematic diagram of a battery 2 provided in an embodiment of the present application. As shown in Fig. 2, the battery 2 comprises a box body 10, a battery cell 3, and a busbar component 6, the battery cell 3 and the busbar component 6 being accommodated in a box body 10.

The box body 10 is used to accommodate the battery cell 3. The box body 10 may be of various configurations. In some embodiments, the box body 10 may include a first box body section 101 and a second box body section 102, the first box body section 101 and the second box body section 102 covering each other and the first box body section 101 and the second box body section 102 together defining an accommodating space 103 for accommodating the battery cell 3. The second box body section 102 can be of a hollow structure with one end open, the first box body section 101 is of a plate-like structure, and the first box body section 101 covers the open side of the second box body section 102 to form the box body 10 having the accommodating space 103; and both the first box body section 101 and the second box body section 102 can also be of a hollow structure with one side open, and the open side of the first box body section 101 covers the open side of the second box body section 102 to form the box body 10 having the accommodating space 103. Of course, the first box body section 101 and the second box body section 102 can be of a variety of shapes, such as a cylinder, a rectangular solid, or the like.

To improve the sealability of the first box body section 101 and the second box body section 102 after they are connected, a sealing member, such as a sealant, a seal ring, etc., may also be provided between the first box body section 101 and the second box body section 102.

Assuming that the first box body section 101 covers the top of the second box body section 102, and the first box body section 103 can also be called an upper box cover, and the second box body section 102 can also be called a lower box body.

In the battery 2, there are multiple battery cells 3. The multiple battery cells 3 may be in series or parallel or hybrid connections with each other, wherein the hybrid connection means that there are both series and parallel connections among battery cells 3. The multiple battery cells 3 may be directly connected together in series or in parallel or in mixed connection, and then the whole composed of the multiple battery cells 3 can be accommodated in the box body 10; and of course, the multiple battery cells 3 can be connected in series or in parallel or in mixed connection to form a battery module (not shown in the figure) first, then multiple battery modules can be connected in series or in parallel or in mixed connection to form a whole, and accommodated in the box body 10. The plurality of battery cells 3 in the battery module may be electrically connected to each other via a busbar component to realize the parallel or series connection or mixed connection of the plurality of battery cells 3 in the battery module.

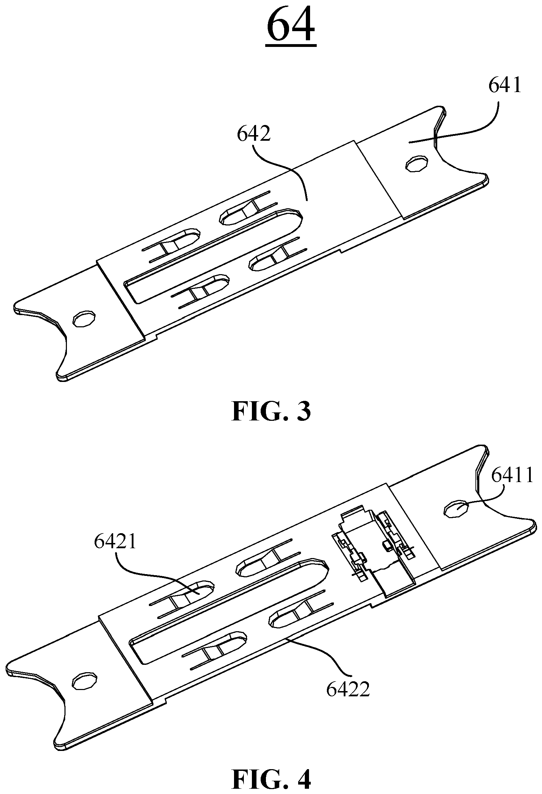

Fig. 3 is a structural schematic diagram of a fixing bracket for a flexible circuit board of an embodiment of the present application. As shown in Fig. 3, the fixing bracket 64 for the flexible circuit board 63 comprises: a connecting portion 641 for connecting the fixing bracket 64 to a target component that needs to be fixed; and a fixing portion 642 for limiting and fixing the flexible circuit board 63, wherein the connecting portion 641 is disposed between the target component and the fixing portion 642 and the connecting portion 641 is connected to the fixing portion 642.

The connecting portion 641 can connect the fixing bracket 64 to any target component, and in embodiments of the present application, taking this target component being the insulating plate 61 in Fig. 3 as an example, the insulating plate 61 is a circuit board formed using a non-conductive material to ensure the safe operation of the line, or it can be other components, which is not limited in the present application.

In embodiments of the present application, as shown in Fig. 3, the fixing bracket 64 may be fixed to the insulating plate 61 using the metal plate 62, or using other components, which is not limited in the present application. That is, the connecting portion 641 fixes the fixing bracket 64 between the insulating plate 61 and the metal plate 62, and the fixing portion 642 presses the flexible circuit board 63 tightly against the insulating plate 61. Here, the flexible circuit board 63 is provided on the insulating plate 61, with end portions of the flexible circuit board 63 being fixedly provided between the insulating plate 61 and the metal plate 62.

The flexible circuit board 63 is a highly reliable, excellent flexible printed circuit board made of a polyimide or polyester film as a substrate. The flexible circuit board has a high assembly density, a small size, and a light weight because of the assembly of high density and the reduced connecting lines between components (including parts), which increases the reliability, and can add wiring layers, and then increase the flexible design. It can also constitute the impedance of the circuit, can form a certain tell transmission circuit, can be provided with a circuit and an electromagnetic shielding layer, and can also be mounted with a metal core layer to meet the special thermal insulation and other functions and needs, and is easy to mount and has high reliability.

In the above solution, the flexible circuit board 63 is provided on the insulating plate 61, with end portions of the flexible circuit board 63 being fixed between the insulating plate 61 and the metal plate 62. By providing the connecting portion 641 on the fixing bracket 64, the fixing bracket 64 can be flatly fixedly provided between the insulating plate 61 and the metal plate 62, so that the fixing bracket 64 will not be deflected in the horizontal direction. By providing the fixing portion 642 on the fixing bracket 64, the flexible circuit board 63 can be pressed tightly against the insulating board 61 to ensure the flatness of the flexible circuit board 63. By providing this fixing bracket 64, the flexible circuit board 63 can be effectively prevented from warping, while protecting the components of the flexible circuit board 63 from being broken.

Fig. 4 is a structural schematic diagram of a fixing bracket for a flexible circuit board of another embodiment of the present application. As shown in Fig. 4, in some embodiments of the present application, the fixing portion 642 further comprises an avoidance portion 6422. The avoidance portion 6422 is used to avoid and fix the flexible circuit board 63 and to accommodate at least part of the flexible circuit board 63.

In embodiments of the present application, the avoidance portion 6422 may be a groove with an opening facing the flexible circuit board 63 as shown in Fig. 4, which means that the groove is used to avoid the flexible circuit board, and a protruding portion of the first fixing component 6421 is disposed within the groove. The avoidance portion may also be of other shapes, which is not limited in the present application.

In the above embodiment, the flexible circuit board 63 is fixed to the insulating plate 61, and the avoidance portion 6422 is provided at the bottom of the fixing portion 642, which can avoid the flexible circuit board 63.

In some embodiments of the present application, the fixing portion 642 comprises a first fixing component 6421, the first fixing component 6421 protruding toward the flexible circuit board 63 in a first direction, with the first direction being a thickness direction of the fixing bracket 63.

By providing the fixing portion 642 on the fixing bracket 64, the flexible circuit board 63 can be pressed tightly onto the insulating board 61 without warping, but if the fixing bracket 64 as a whole shakes when there are bumps in the transportation of the flexible circuit board 63, the fixing portion 642 of the fixing bracket 64 will also be moved, so that there will be a gap between the fixing portion 642 and the flexible circuit board 63, then the fixing portion 642 will not be able to press the flexible circuit board 63 tightly onto the insulating board 61, and then there is still a possibility of warping of the flexible circuit board 63 during transportation.

In the above embodiment, the first fixing portion 6421 protrudes toward the flexible circuit board 63, and when the flexible circuit board 63 is firmly fixed to the insulating plate 61, the first fixing portion 6421 tightly presses the flexible circuit board 63, so that the flexible circuit board 63 is located between the first fixing portion 6421 and the insulating plate 61. In this way, during transportation, even if there is a small-scale displacement of the flexible circuit board 63 on the insulating plate 61, the first fixing component 6421 can use its own elasticity to press the flexible circuit board 63 tightly against the insulating plate 61. By providing along the first direction the first fixing component 6421 protruding toward the flexible circuit board 63, it can be ensured that the flexible circuit board 63 is pressed tightly against the insulating plate 61.

With continued reference to Fig. 4, in some embodiments of the present application, the connecting portion comprises connecting holes 6411, the connecting holes 6411 being used to connect the fixing bracket 64 to the target component.

The fixing bracket 64 is fixed to the insulating plate 61 by means of the connecting portion 641, and the connecting holes 6411 are provided on the connecting portion 641, and the fixing bracket 64 as a whole is fixed to the insulating plate 61 by using welding of the small-area connecting holes 6411 to the insulating plate 61. This method is simple and facilitates widespread use in the production process.

In the above solution, the fixing bracket 64 is fixed between the insulating plate 61 and the metal plate 62 by using welding of the small-area connecting holes 6411 to the insulating plate 61. This method is simple to implement, is low in cost and is highly operable, and has good practical performance.

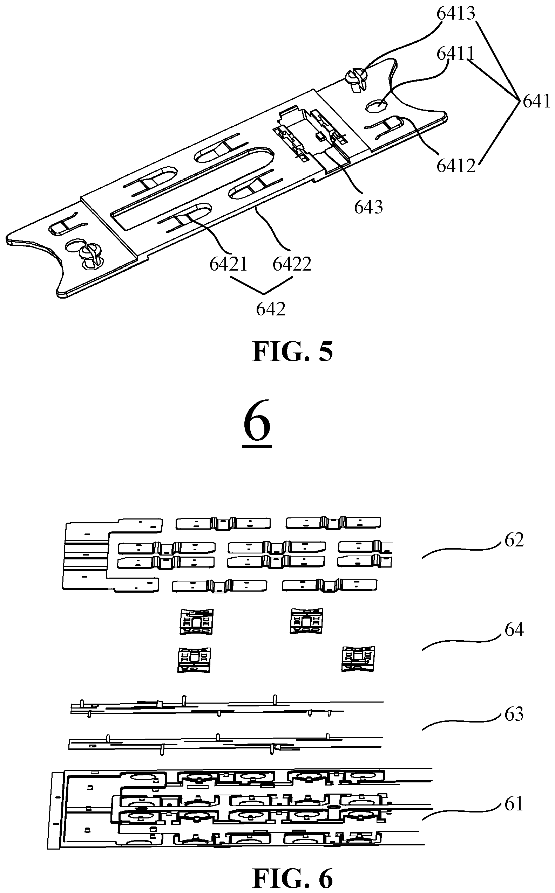

Fig. 5 is a structural schematic diagram of a fixing bracket for a flexible circuit board of another embodiment of the present application. As shown in Fig. 5, in some embodiments of the present application, the connecting portion 641 comprises a second fixing component 6412, the second fixing component 6412 protruding away from the flexible circuit board 63 in a second direction and being used to elastically connect the target component, with the second direction being a thickness direction of the fixing bracket 64 and the first direction being opposite to the second direction.

By providing the first fixing component 6421 on the fixing portion 642, it can be ensured that the flexible circuit board 63 can be pressed tightly against the insulating board 61 even when the flexible circuit board 63 is shaken during transportation. However, failure of the fixing of the fixing bracket 64 on the insulating board 61 results in failure of the fixing of the flexible circuit board 63 by the fixing bracket 64.

In the above solution, the fixing bracket 64 is fixed to the insulating plate 61 via the connecting portion 641 and the metal plate 62. If the metal plate 62 is not completely welded to the fixing bracket 64, an upward and downward deviation of the position of the fixing bracket 64 will occur during transportation. By providing the second fixing portion 6412 on the connecting portion 641, even if the metal plate 62 is not completely welded to the fixing bracket 64, by means of the second fixing portion 6412 being affixed to and pressed tightly against the insulating plate 61, upward and downward deviation of the position of the fixing bracket 64 can be prevented after the metal plate 62 is pressed against and welded to the fixing bracket 64. Therefore, by providing the second fixing component 6412, the fixing effect between the fixing bracket 64 and the insulating plate 61 can be further enhanced to prevent upward and downward deviation in the position of the fixing bracket 64 during transportation.

As shown in Fig. 5, in some embodiments of the present application, the connecting portion 641 comprises a fixing structure 6413 for snap-fitting of the connecting portion 641 to the target component.

The fixing bracket 64 is fixed to the insulating plate 61 through the connecting portion 641. The connecting portions 641 of the adjacent fixing brackets 64 and a position-limit hole on the insulating plate 61 form triangular position balancing, and this triangular balancing position is welded and fixed using the metal plate 62, and if the metal plate 62 at this triangular balancing position fails or loosens, the fixing between the insulating plate 61 and the fixing brackets 64 will fail.

In the above solution, by providing the fixing 6413 on the fixing bracket 64, the fixing bracket 64 is in snap-fit with the metal plate 62 as an integral body, so that even if the triangular fixing means between the fixing bracket 64 and the insulating plate 61 is damaged or the insulating plate 61 is damaged, the fixing bracket 64 is ensured to be fixed integrally to the metal plate 62, thus preventing failure of sampling of the battery 2 caused by warping and wearing of the flexible circuit board 63 due to wobbling of the fixing bracket 64.

In some embodiments of the present application, as shown in Fig. 5, the fixing structure 6413 comprises a hot riveting post and a snap-fit structure.

In the above solution, the fixing structure 6413 causes the metal plate 62 to be in snap-fit with the fixing bracket 64 as an integral body by means of a hot riveting post. This method is simple and facilitates widespread use in subsequent production.

In some embodiments of the present application, the connecting portion 641 forms a step structure with the fixing portion 642, and the connecting portion 641 has a thickness less than the thickness of the fixing portion 642.

The metal plate 62, the flexible circuit board 63, and the fixing bracket 64 are all provided on the busbar plate 61. The metal plate 62 is spaced apart from the fixing bracket 64 and the flexible circuit board 63, which means that the flexible circuit board 63 and the fixing bracket 64 are provided between metal plates 62.

In the above-described solution, there is a step structure formed by the difference in thickness between the connecting portion 641 and the fixing portion 642, which allows two ends of the fixing bracket 64 to snap exactly to the metal plate 62, thereby enhancing the fixing of the fixing bracket 64 to the metal plate 62 on the insulating plate 61.

Please continue to refer to Fig. 5. As shown in Fig. 5, in some embodiments of the present application, the fixing bracket 64 of the flexible circuit board 63 further comprises an add-on plug-in member 643, the plug-in member 643 being used for snap-fit with the add-on external component.

In the present application, the external component may be a negative temperature coefficient thermistor that samples the performance such as the temperature of the battery. Negative temperature coefficient thermistors, also known as NTC thermistors, are a class of sensor resistors of which the resistance value decreases with increasing temperature, and are widely used in various electronic components. Negative temperature coefficient thermistors are manufactured by a ceramic process using metal oxides such as manganese, cobalt, nickel and copper as the main materials. All of these metal oxide materials have semiconductor properties, as they are completely similar to semiconductor materials such as germanium and silicon in the way they conduct electricity. At low temperatures, these oxide materials have a low number of carriers (electrons and holes), so their resistance values are high; and as the temperature increases, the number of carriers increases, so the resistance values decrease. NTC thermistors vary from 100 to 1,000,000 ohms at room temperature with a temperature coefficient of -2% to -6.5%. The NTC thermistor can be widely used for temperature measurement, temperature control, and temperature compensation. It may be some other components, which is not limited in the present application.

In the above solution, the add-on external component is used for sampling the performance such as the temperature of the battery 2, and the plug-in member 643 is provided to enable the external component to be fixed at a sampling point where the battery 2 needs to be sampled, thus preventing the add-on external component from falling off.

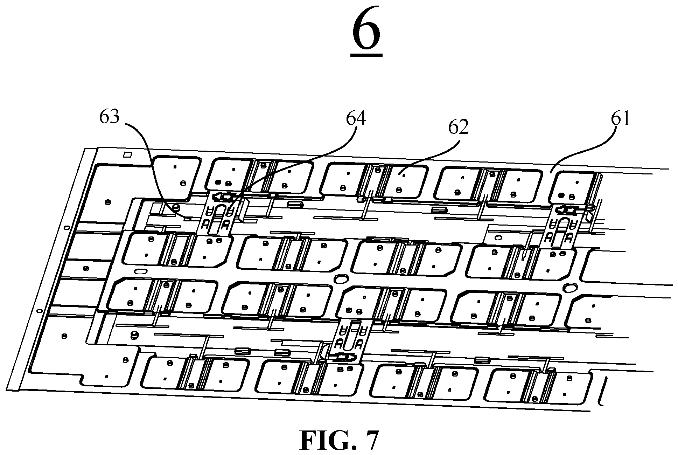

Embodiments of the present application also provide a busbar component 6, and Figs. 6 and 7 show an exploded schematic diagram and a structural schematic diagram of a busbar component of an embodiment of the present application, respectively. As shown in Figs. 6 and 7, the busbar component 6 comprises an insulating plate 61; a metal plate 62 fixed to the insulating plate 61; a flexible circuit board 63 provided on the insulating plate 61, with end portions of the flexible circuit board 63 being fixed between the insulating plate 61 and the metal plate 62; and a fixing bracket 64 in the aforementioned embodiment.

Embodiments of the present application further provide a battery 2 comprising a plurality of battery cells 3 and a busbar component 6 in the aforementioned embodiment.

Embodiments of the present application further provide an electrical device, which may include the battery 2 in the aforementioned embodiment. Optionally, the electrical device may be a vehicle 1, a ship or a spacecraft, or the like, which, however, is not limited in embodiments of the present application.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather comprises all technical solutions falling within the scope of the claims.

## Claims

1. A fixing bracket for a flexible circuit board, comprising:
a connecting portion (641) for connecting the fixing bracket (64) to a target component that needs to be fixed; and
a fixing portion (642) for limiting and fixing the flexible circuit board (63), wherein
the connecting portion (641) is disposed between the target component and the fixing portion (642) and the connecting portion (641) is connected to the fixing portion (642).

2. The fixing bracket for a flexible circuit board according to claim 1, wherein the fixing portion (642) further comprises an avoidance portion (6422), the avoidance portion (6422) being used to avoid and fix the flexible circuit board (63) and to accommodate at least part of the flexible circuit board (63).

3. The fixing bracket for a flexible circuit board according to claim 1 or 2, wherein the fixing portion (642) comprises a first fixing component (6421), the first fixing component (6421) protruding towards the flexible circuit board (63) in a first direction, with the first direction being a thickness direction of the fixing bracket (64).

4. The fixing bracket for a flexible circuit board according to any one of claims 1 to 3, wherein the connecting portion (641) comprises connecting holes (6411) for connecting and fixing the fixing bracket (64) to the target component.

5. The fixing bracket for a flexible circuit board according to claim 3 or 4, wherein the connecting portion (641) comprises:
a second fixing component (6412), the second fixing component (6412) protruding away from the flexible circuit board (63) in a second direction and being used to resiliently connect the target component, with the second direction being a thickness direction of the fixing bracket (64) and the second direction being opposite to the first direction.

6. The fixing bracket for a flexible circuit board according to any one of claims 1 to 5, wherein the connecting portion (641) comprises:
a fixing structure (6413) for snap-fit of the connecting portion (641) to the target component.

7. The fixing bracket for a flexible circuit board according to claim 6, wherein the fixing structure (6413) comprises a hot riveting post and a snap-fit structure.

8. The fixing bracket for a flexible circuit board according to any one of claims 1 to 7, wherein, the connecting portion (641) forms a step structure with the fixing portion (642), and the connecting portion (641) has a thickness less than the thickness of the fixing portion (642).

9. The fixing bracket for a flexible circuit board according to any one of claims 1 to 8, further comprising:
an add-on plug-in member (643), the add-on plug-in member (643) being used for snap-fit of an add-on external component.

10. A busbar component, comprising:
an insulating plate (61);
a metal plate (62) fixed to the insulating plate (61);
a flexible circuit board (63) provided on the insulating plate (61), with end portions of the flexible circuit board (63) being fixed between the insulating plate (61) and the metal plate (62); and
a fixing bracket (64) according to any one of claims 1-9.

11. A battery, comprising:
a plurality of battery cells (3), and
a busbar component (6) according to claim 10.

12. An electrical device, comprising a battery (2) according to claim 10, the battery (2) being used to provide electric energy.
